# FASCICULE DE BREVET EUROPEEN

(11) **EP 3 722 210 B1**
(45) Date de publication et mention de la délivrance du brevet: **13.10.2021**
(21) Numéro de dépôt: 20169197.9
(22) Date de dépôt: 10.04.2020
(51) Int. Cl.: B64D 27/24, F02K 1/06, B64D 29/00, B64C 11/00, F02K 5/00

(54) **SYSTEME PROPULSIF POUR UN AERONEF**
ANTRIEBSSYSTEM FÜR EIN FLUGZEUG
PROPULSIVE SYSTEM FOR AN AIRCRAFT

(30) Priorité: 10.04.2019 FR 1903827
(43) Date de publication de la demande: 14.10.2020
(73) Titulaire: SAFRAN, 75015 Paris (FR)
(72) Inventeur: BESSE, Jean-Louis, Robert, Guy, 77550 MOISSY-CRAMAYEL (FR); MALDONADO, Ye-Bonne, Karina, 77550 MOISSY-CRAMAYEL (FR)
(74) Mandataire: Gevers & Orès

(56) Documents cités:
- EP-A2- 2 184 481
- WO-A1-2008/045081
- US-A1- 2010 018 212
- US-B1- 7 458 221

## Description

### Domaine technique de l'invention

La présente invention concerne le domaine des systèmes propulsifs pour aéronef. Elle se rapporte notamment à un système propulsif à profil de carénage de nacelle à section variable.

### Arrière-plan technique

Un système propulsif pour aéronef comporte au moins un rotor ou une hélice comportant une pluralité de pales montées sur un arbre tournant.

Il existe des aéronefs, et notamment des Aéronefs à Décollage et Atterrissage Verticaux (ADAV ou VTOL acronyme pour *Vertical Take-Off and Landing* en langue anglaise), présentant des systèmes propulsifs à rotors simples lorsqu'ils ne comprennent qu'un seul rotor ou contrarotatifs lorsqu'ils comprennent des rotors regroupés par paire tournant en sens opposés.

Ces systèmes propulsifs sont soit à rotors carénés (le rotor est alors entouré d'un carénage de nacelle annulaire), soit à rotors libres, les systèmes propulsifs et notamment les rotors (libres ou carénés) pouvant être montés sur un arbre de pivotement permettant l'orientation des systèmes propulsifs et donc des rotors entre une position verticale et une position horizontale, par exemple l'orientation à la verticale pour un décollage ou un atterrissage vertical et l'orientation à l'horizontale pour le vol d'avancement ou mode avion. Les rotors carénés présentent plusieurs avantages intéressants, tels que :
- une importante diminution de la signature sonore du rotor en émission directe ;
- une protection des pales du rotor vis-à-vis des obstacles alentours ;
- une amélioration des performances du rotor, notamment en vol stationnaire de l'aéronef ou à faible vitesse d'avancement.

En effet, la nacelle carénée procure au rotor une poussée additionnelle en vol stationnaire (autrement dit lorsque l'aéronef est immobile dans les airs, en sustentation sans support ni soutien), lors du décollage ou à faible vitesse d'avancement liée à l'effet de la nacelle carénée sur un flux d'air en aval du rotor, en référence au sens d'écoulement de ce flux d'air sur la nacelle carénée, encore appelé un tube de courant. Plus précisément, sans la présence du carénage de nacelle, avec un rotor libre, le flux d'air en aval du rotor présente une contraction naturelle vers l'intérieur. Autrement dit, le diamètre du tube de courant décroit vers l'aval jusqu'à atteindre un diamètre égal à la moitié de la section du rotor.

En revanche, pour un rotor caréné, la section de sortie du carénage de nacelle définit la forme du tube de courant d'air, à savoir une forme cylindrique en sortie du carénage de nacelle de section sensiblement constante, empêchant ainsi sa contraction naturelle.

Le bilan propulsif dépend de la section de sortie du carénage de nacelle de sorte que plus la section de sortie du carénage de nacelle est grande, plus le bilan propulsif augmente. En effet, la poussée engendrée par la présence du carénage de nacelle est donc générée au niveau du bord d'attaque dudit carénage de nacelle, par l'intermédiaire d'une dépression locale due au contournement du carénage de nacelle par le flux d'air en écoulement. Plus le débit d'air admis dans le système propulsif augmente, autrement dit plus la section de sortie du carénage de nacelle augmente, plus cette dépression est importante et, par conséquent, plus la poussée engendrée est grande. Toutefois, à haute vitesse, le rendement propulsif d'un rotor caréné est moindre. En effet, lorsque la vitesse d'avancement de l'aéronef augmente, la performance du rotor caréné diminue en raison de l'augmentation rapide d'une trainée induite par la présence du carénage de nacelle. De la sorte, selon le régime de rotation et la dimension du rotor, le rendement propulsif diminue. Ainsi, avec un rotor caréné, le masquage de l'émission du bruit et la sécurité sur le périmètre du rotor sont privilégiés au détriment du rendement propulsif en croisière de l'aéronef, c'est-à-dire à grande vitesse d'avancement.

De plus, en fonction des conditions de vol de l'aéronef, notamment lors du décollage, ou lorsque l'aéronef est en vol vertical (ou mode VTOL) stationnaire ou à faible vitesse à proximité et au-dessus d'une surface telle que le sol, le sens d'écoulement du flux d'air autour de l'aéronef et notamment autour du carénage de nacelle des systèmes propulsifs de l'aéronef varie. En effet, dans ces conditions, le flux d'air projeté en aval du rotor impacte la surface située en-dessous de l'aéronef, ce qui dévie sa trajectoire et modifie le sens de l'écoulement du flux d'air autour du profil aérodynamique constituant le carénage de nacelle. Ainsi, les caractéristiques aérodynamiques de la carène sont modifiées par rapport à une situation de vol en croisière ou loin d'un obstacle. Lorsque l'aéronef est en vol vertical, stationnaire ou à faible vitesse au-dessus d'une surface suffisamment proche, cette surface a un effet sur la circulation de l'écoulement autour de l'aéronef, en particulier autour du carénage de nacelle. Cet effet est appelé dans la suite « effet de sol ».

Pour des performances aérodynamiques optimales, il serait donc avantageux d'adapter la forme des profils aérodynamiques constituant le carénage de nacelle aux conditions de vol de l'aéronef (notamment lorsque les « effets de sol » sont importants).

Dans la technique actuelle, il existe des solutions permettant d'adapter une forme de profil aérodynamique aux conditions de vols d'un aéronef mais elles concernent, pour une grande majorité, les ailes des aéronefs, ces solutions n'étant pas transposables ni adaptables à des éléments axisymétriques tels que les carénages de nacelle du système propulsif (par exemple des turboréacteurs ou un propulseur électrique).

Il a été proposé des turboréacteurs à double flux dont il est possible de faire varier localement la géométrie d'une veine du flux d'air secondaire ou encore des turboréacteurs présentant un carénage de nacelle dont il est possible de faire varier la section d'entrée. Un exemple de système propulsif pour un aéronef est décrit dans WO 2008/045081 A1.

Toutefois, aucune de ces solutions proposées ne propose d'adapter la section de sortie ou d'entrée d'un carénage de nacelle du système propulsif, notamment en mode VTOL à rotors, aux conditions de vol d'un aéronef.

Il existe donc un besoin de fournir une solution simple et efficace aux problèmes évoqués ci-dessus.

Un but de la présente invention est de proposer une solution permettant d'adapter simplement et rapidement les systèmes propulsifs des aéronefs afin d'optimiser leurs performances aérodynamiques et acoustiques, selon les phases de vols des aéronefs, tout en assurant la sécurité des rotors.

### Résumé de l'invention

A cet effet, l'invention concerne un système propulsif pour un aéronef, comprenant au moins un rotor et un carénage de nacelle s'étendant autour dudit au moins un rotor par rapport à un axe de rotation dudit rotor, ce carénage de nacelle comprenant :
- un tronçon amont formant une section d'entrée du carénage de nacelle ;
- un tronçon aval dont une extrémité aval forme une section de sortie du carénage de nacelle ; et
- un tronçon intermédiaire reliant lesdits tronçons amont et aval ;
   caractérisé en ce que le tronçon aval comprend une paroi radialement interne et une paroi radialement externe réalisées dans un matériau déformable à mémoire de forme, et en ce que l'extrémité aval formant la section de sortie comporte un actionneur annulaire pneumatique ou hydraulique s'étendant autour dudit axe de rotation et configuré pour se déformer radialement sous l'effet d'une pression de commande prédéterminée de sorte à faire varier un diamètre externe de la section de sortie entre un diamètre minimum et un diamètre maximum déterminés.

Le système propulsif selon l'invention permet ainsi de pouvoir bénéficier de manière simple et rapide, selon les besoins de l'aéronef, d'une forme de carénage de nacelle adaptée aux conditions de vol de l'aéronef de sorte à assurer un rendement propulsif optimal tout en minimisant les nuisances sonores induites par le rotor du système propulsif et en assurant une sécurité de ce rotor par la présence du carénage de nacelle. Autrement dit, le système propulsif bénéficie des avantages de la présence d'un carénage de nacelle tout en ayant la possibilité d'adapter ce dernier selon les conditions de vol de l'aéronef.

La section d'entrée du carénage de nacelle du système propulsif peut correspondre à un bord d'attaque dudit carénage. La section de sortie du carénage peut correspondre à un bord de fuite dudit carénage. Ainsi, le diamètre externe du bord de fuite peut correspondre au diamètre externe de la section de sortie du système propulsif.

De préférence et avantageusement, l'actionneur annulaire est réalisé en matériau élastique rigidifié radialement en incluant des fibres.

Selon un autre exemple de réalisation, l'actionneur annulaire comprend une vessie annulaire en matériau souple enchâssée dans un ressort spirale. Avantageusement, le système propulsif comprend en outre des pontets de rigidification reliant les parois radialement interne et radialement externe du tronçon aval et permettant d'assurer un écart sensiblement constant entre les parois radialement interne et radialement externe du tronçon aval, notamment lors du passage d'une position convergente à une position divergente du tronçon aval du carénage de nacelle du système propulsif, et inversement. Avantageusement, le tronçon intermédiaire est rigide et est relié par au moins un bras à un moteur du système propulsif.

Cela procure au carénage de nacelle du système propulsif une structure rigide pouvant assurer une fonction de blindage.

De préférence et avantageusement, le tronçon amont est réalisé dans un matériau déformable à mémoire de forme, ce tronçon comprenant des moyens permettant de faire varier un diamètre externe de la section d'entrée du système propulsif.

De la sorte, le carénage de nacelle du système propulsif selon l'invention peut être aisément adapté selon les phases de vol d'un aéronef muni d'un tel système propulsif.

Selon un exemple de réalisation, le diamètre externe de la section d'entrée varie sous l'effet d'un dispositif d'expansion pneumatique ou hydraulique. Cette solution présente l'avantage intéressant de ne pas nécessiter beaucoup d'énergie pour être mis en œuvre.

Selon un autre exemple de réalisation, le diamètre externe de la section d'entrée varie sous l'effet d'un revêtement annulaire chauffant, le tronçon amont présentant encore des caractéristiques thermo-rétractables.

Cette solution est simple à mettre en œuvre, de plus elle présente un encombrement et une masse réduits.

Selon un autre exemple de réalisation, le diamètre externe de la section d'entrée varie sous l'effet d'un mécanisme actionneur à vérin configuré pour coopérer avec des moyens solidaires d'une surface interne d'une paroi radialement externe du tronçon amont.

Selon un autre exemple de réalisation, le diamètre externe de la section d'entrée varie sous l'effet d'un actionneur annulaire pneumatique ou hydraulique configuré pour se déformer radialement sous l'effet d'une pression de commande prédéterminée.

Avantageusement, le tronçon amont comprend des raidisseurs reliés par un dispositif anti-flambement. Cela permet de conserver un profil aérodynamique homogène de la section d'entrée du carénage de nacelle du système propulsif selon l'invention.

La présente invention concerne encore un aéronef caractérisé en ce qu'il comporte au moins un système propulsif présentant au moins l'une quelconque des caractéristiques susmentionnées, le système propulsif étant monté pivotant sur l'aéronef par l'intermédiaire d'un arbre de pivotement déporté ou traversant par rapport au rotor.

Comme indiqué précédemment, le carénage de nacelle du système propulsif selon l'invention peut être aisément adapté selon les phases de vol d'un aéronef muni d'un tel système propulsif, ainsi que selon le mode de vol en translation ou vertical de l'aéronef.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1a] La figure 1a est une vue à caractère schématique en perspective d'un premier exemple de réalisation d'un système propulsif montré avec une nacelle montée sur un axe de pivotement déporté, le système propulsif étant en position horizontale ;
[Fig. 1b] La figure 1b est une vue analogue à la figure 1a, illustrant le système propulsif en position verticale ;
[Fig. 1c] La figure 1c est une vue à caractère schématique en perspective d'un second exemple de réalisation d'un système propulsif montré avec une nacelle montée sur un axe de pivotement traversant, le système propulsif étant en position horizontale ;
[Fig. 2] La figure 2 est une vue en coupe à caractère schématique montrant le système propulsif selon l'invention avec son tronçon aval de carénage de nacelle en position convergente ;
[Fig. 3] La figure 3 est une vue analogue à la figure 2 montrant le système propulsif selon l'invention avec son tronçon aval de carénage de nacelle en position intermédiaire ;
[Fig. 4] La figure 4 est une vue analogue à la figure 2 montrant le système propulsif selon l'invention avec son tronçon aval de carénage de nacelle en position divergente ;
[Fig. 5a] La figure 5a est une vue partielle en coupe et à caractère schématique du carénage de nacelle du système propulsif selon l'invention montrant l'entrée du carénage de nacelle en position neutre ;
[Fig. 5b] La figure 5b est une vue analogue à la figure 5a montrant l'entrée du carénage de nacelle en position convergente ;
[Fig. 5c] La figure 5c est une vue schématique en coupe longitudinale du tronçon amont du carénage de nacelle montré en position convergente ;
[Fig. 6a] La figure 6a est une vue de détail en coupe de l'entrée du carénage de nacelle du système propulsif en position neutre ;
[Fig. 6b] La figure 6b est une vue analogue à la figure 6a montrant l'entrée du carénage de nacelle du système propulsif en position convergente ;
[Fig. 6c] La figure 6c est une vue partielle de face de l'entrée du carénage de nacelle du système propulsif ;
[Fig. 7a] La figure 7a est une vue de face à caractère schématique, d'un exemple de réalisation de l'actionneur annulaire selon l'invention ;
[Fig. 7b] La figure 7b est une vue en coupe à caractère schématique, d'un exemple de réalisation de l'actionneur annulaire selon l'invention, montré dans une position de repos ;
[Fig. 7c] La figure 7c est une vue en coupe à caractère schématique, d'un exemple de réalisation de l'actionneur annulaire selon l'invention, montré dans une position convergente.

### Description détaillée de l'invention

Dans le présent exposé, les termes « axial », « interne » et « externe » sont utilisés en référence à l'axe de rotation du système propulsif selon l'invention. Un système propulsif est généralement constitué :
- d'une nacelle ;
- d'un moteur et de son système de commande et de contrôle ;
- et, dans le cas d'une propulsion à hélice ou rotor, de son hélice ou rotor(s). La nacelle est l'élément qui permet d'intégrer le moteur à l'aéronef, elle est constituée :
- de carénages de nacelle (permettant de capoter le moteur, de caréner les rotors, de capter l'air en écoulement en fonctionnement de l'aéronef, de créer un effet de poussée, inverser la poussée sur les systèmes propulsifs, ...) ;
- d'équipements à monter sur le moteur (tel l'habillage moteur regroupant les réseaux électriques, hydrauliques, pneumatiques connus sous l'acronyme EBU de l'anglais Engine Build-Up) ; et
- des systèmes d'accrochage à l'aéronef.

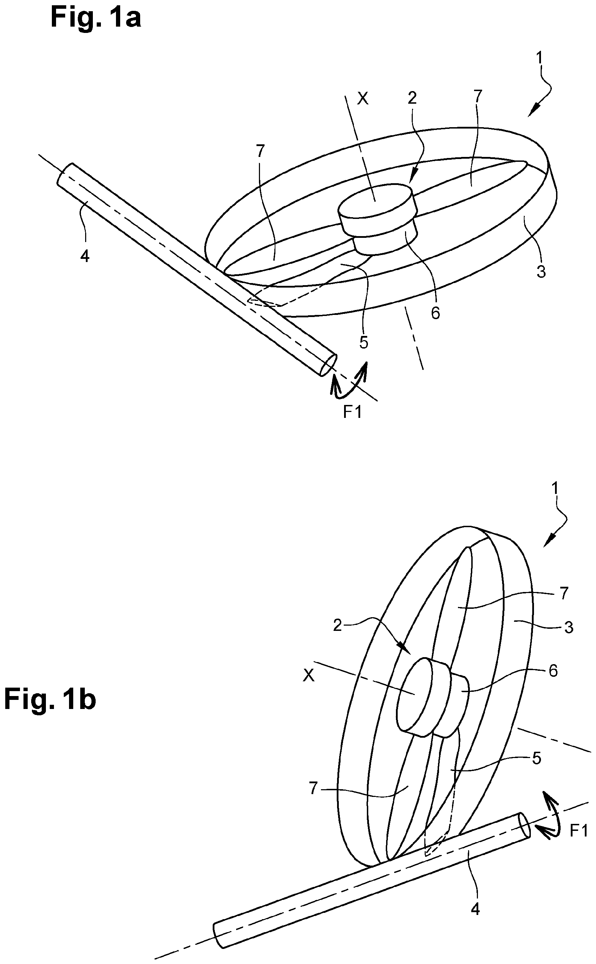

Les figures 1a et 1b illustrent, de manière simplifiée, un premier mode de réalisation d'un système propulsif 1 pour aéronef selon l'invention.

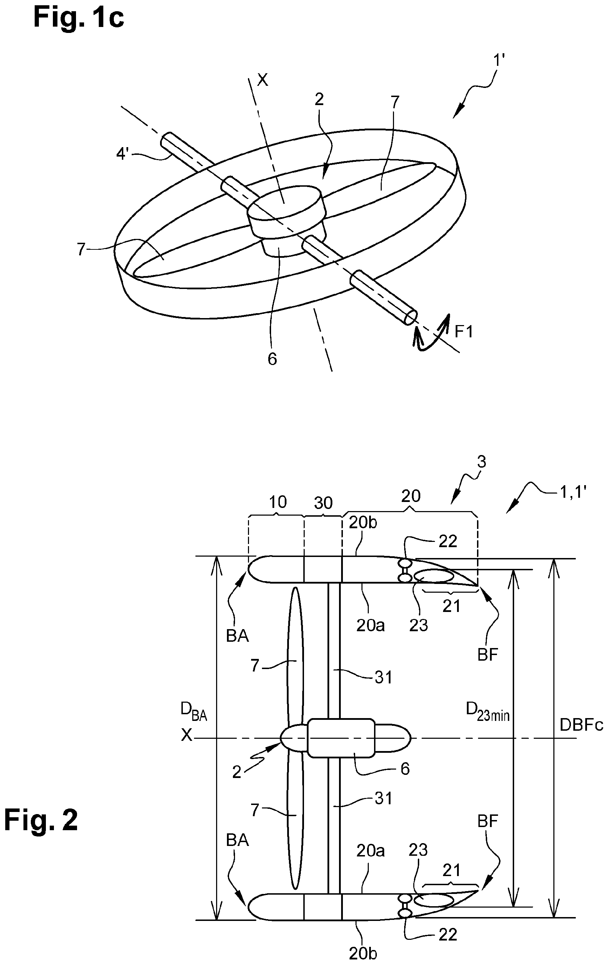

Le système propulsif 1 comprend ici au moins un rotor 2 et un carénage 3 de nacelle s'étendant autour dudit au moins un rotor 2 par rapport à un axe de rotation X du rotor 2. Le système propulsif 1 peut être monté fixe sur l'aéronef. Le système propulsif 1 peut encore être monté sur un arbre de pivotement 4, déporté par rapport à l'axe de rotation X du rotor 2. L'arbre de pivotement 4 est fixé par tout moyen au système propulsif 1, d'une part, et à l'aéronef, d'autre part, et permet l'orientation du système propulsif 1 sur l'aéronef, autorisant le basculement du système propulsif 1 autour de l'arbre de pivotement 4, selon la flèche F1, par l'intermédiaire d'actionneurs connus, entre une position horizontale telle qu'illustrée à la figure 1a, et une position verticale telle qu'illustrée à la figure 1 b. Ce basculement permet de faire passer l'aéronef d'un mode classique comme pour un avion, à un mode VTOL ou hélicoptère.

Le rotor 2 du système propulsif 1 est relié à l'aéronef par un mât 5 supportant un moteur 6, par exemple électrique, entrainant en rotation le rotor 2 par l'intermédiaire d'un arbre de puissance, de manière connue en soi. Selon l'exemple illustré nullement limitatif, chaque rotor 2 comprend deux pales 7. La figure 1c illustre un second mode de réalisation d'un système propulsif 1' pour aéronef selon l'invention dans lequel le système propulsif 1' peut être monté sur un arbre de pivotement 4', traversant le rotor 2 de manière perpendiculaire par rapport à l'axe de rotation X du rotor 2. Le rotor 2 du système propulsif 1' est relié à l'aéronef par un mât 5 supportant un moteur 6, par exemple électrique, entrainant en rotation le rotor 2 par l'intermédiaire d'un arbre de puissance, de manière connue en soi. Selon l'exemple de réalisation représenté, le mât 5 du rotor 2 est confondu avec l'arbre de pivotement 4'.

En référence aux figures 2 à 5, le carénage 3 de nacelle du système propulsif 1, 1' selon l'invention comprend :
- un tronçon amont 10 ;
- un tronçon aval 20 ; et
- un tronçon intermédiaire 30 reliant lesdits tronçons amont 10 et aval 20.

Le tronçon amont 10 forme une section d'entrée (ou dit autrement un bord d'attaque) BA ou entrée d'air du carénage 3 de nacelle. De préférence et avantageusement, le tronçon amont 10 est réalisé dans un matériau déformable à mémoire de forme et il comprend des moyens permettant de faire varier un diamètre externe D_{BA} de la section d'entrée BA.

Le matériau constituant le tronçon amont 10 est à la fois rigide pour conférer au tronçon amont 10 une forme structurante et souple pour conférer au tronçon amont 10 une possibilité de déformation, il est ainsi appelé « semi rigide ». Ainsi, le tronçon amont 10 est réalisé dans un matériau apte à réagir sous l'effet d'un actionneur tel que décrit ci-après. Lorsque le tronçon amont 10 est excité par l'actionneur, le tronçon amont 10 prend une forme structurante convergente, et lorsque la contrainte d'excitation de l'actionneur s'arrête, le tronçon amont 10 reprend sa forme initiale. Le matériau composant le tronçon amont 10 peut ainsi être un alliage, un composite ou un matériau organique permettant au tronçon amont 10 de travailler dans un domaine élastique. Par exemple, le tronçon amont 10 est réalisé en un alliage de nickel et titane (encore connu sous le nom « Kiokalloy) tel que le NiTiNol ou le NiTiCu.

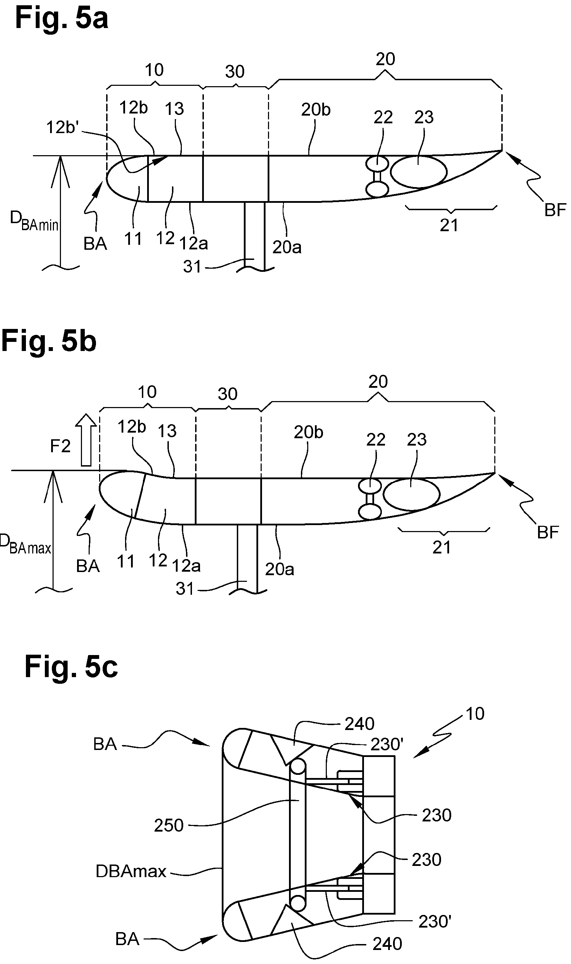

Plus précisément, en référence aux figures 5a à 6c, le tronçon amont 10 comprend une lèvre annulaire amont 11 et une portion annulaire aval 12. Cette portion annulaire aval 12 comprend une paroi radialement interne 12a et une paroi radialement externe 12b. Ces parois radialement interne 12a et externe 12b sont reliées, d'une part, en amont, à la lèvre 11 et, d'autre part, en aval, au tronçon intermédiaire 30.

Un but de la présente invention est de pouvoir bénéficier d'un carénage 3 de nacelle de système propulsif 1, 1' dont il est possible de faire varier la section de d'entrée d'air et notamment la forme des profils aérodynamiques constituant le carénage de nacelle. Autrement dit dont il est possible de faire varier le diamètre externe D_{BA} de la section d'entrée BA ainsi que la forme aérodynamique du tronçon amont 10 entre une configuration dite convergente dans laquelle un tube de courant d'air en entrée du carénage 3 de nacelle présente une forme convergente, et une configuration dite neutre dans laquelle un tube de courant d'air en entrée du carénage 3 de nacelle présente une forme neutre sensiblement cylindrique.

Les figures 5a et 5b montrent de manière schématique, la variation du diamètre externe D_{BA} de la section d'entrée BA entre une position dite neutre (figure 5a) dans laquelle le diamètre externe est minimal D_{BAmin} et une position dite convergente (figure 5b) dans laquelle le diamètre externe est maximal D_{BAmax}, le diamètre externe en position convergente D_{BAmax} étant donc supérieur au diamètre externe en position neutre D_{BAmin} et l'entrée (autrement dit le tronçon amont 10) du carénage 3 de nacelle est dite convergente. Autrement dit, il y a une évolution de la veine de flux d'air telle que la dimension radiale de la section d'entrée d'air est supérieure à la dimension radiale de la section de sortie d'air. Il ne s'agit donc pas ici d'une définition géométrique de la convergence mais d'une définition fluidique.

Selon un premier exemple de réalisation avantageux, afin de faire varier le diamètre externe D_{BA} de la section d'entrée BA entre la position neutre et la position convergente, et inversement, le tronçon amont 10, et plus précisément la paroi radialement interne 12a et la paroi radialement externe 12b de la portion annulaire aval 12 du tronçon amont 10 sont réalisées dans un matériau présentant des caractéristiques thermo-rétractables pouvant se déformer, à savoir se rétracter, sous l'effet de la chaleur. A cet effet, la paroi radialement externe 12b de la portion annulaire aval 12 comprend encore un revêtement annulaire chauffant 13 configuré pour fournir la chaleur afin de déformer, plus précisément, de rétracter, la paroi radialement externe 12b du tronçon amont. Ainsi, en position neutre, comme illustré à la figure 5a, les parois radialement interne 12a et externe 12b présentent des dimensions axiales sensiblement égales. En revanche, sous l'effet de la chaleur produite par le revêtement chauffant 13, la paroi radialement externe 12b se rétracte, autrement dit sa dimension axiale diminue par rapport à sa dimension axiale neutre, ce qui entraine l'étirement de la paroi radialement interne 12a, autrement dit sa dimension axiale augmente par rapport à sa dimension axiale neutre. Comme il sera détaillé ci-après, le tronçon intermédiaire 30 est rigide de sorte que le tronçon amont 10 est fixe par l'intermédiaire de ses parois radialement interne 12a et externe 12b solidaires du tronçon intermédiaire 30, la section d'entrée BA étant libre, de sorte que la rétractation de la paroi radialement externe 12b et l'étirement de la paroi radialement interne 12a entrainent le déplacement de la lèvre 11 (ou de la section d'entrée BA) selon une direction radialement externe représentée par la flèche F2 à la figure 5b entrainant ainsi une augmentation du diamètre externe D_{BA}.

Le revêtement annulaire chauffant 13 peut être mis en chauffe par tout moyen connu en soi, tel que par exemple par un circuit électrique résistif circulant dans ledit revêtement 13.

La paroi radialement interne 12a et la paroi radialement externe 12b de la portion annulaire aval 12 du tronçon amont 10 sont réalisées dans un matériau présentant également des caractéristiques de mémoire de forme de sorte à leur permettre de retrouver leur forme et leur dimension axiale neutre, et, par conséquent, de sorte que la section d'entrée BA retrouve également son diamètre neutre D_{BAmin} lorsque le revêtement chauffant 13 n'est plus mis en chauffe.

Selon un second exemple de réalisation avantageux illustré à la figure 5c, afin de faire varier le diamètre externe D_{BA} de la section d'entrée BA entre la position neutre et la position convergente, et inversement, le tronçon amont 10 comporte au moins deux mécanismes actionneurs à vérin 230 diamétralement équi-répartis configurés pour coopérer avec des moyens 240 solidaires de la surface interne 12b' de la paroi radialement externe 12b, de sorte à faire varier un diamètre externe D_{BA} de la section d'entrée BA entre un diamètre minimum et un diamètre maximum.

Plus précisément, un bras de vérin 230' du mécanisme actionneur à vérin 230 est configuré pour sortir ou rentrer sous l'effet d'une commande prédéterminée de sorte à agir sur les moyens 240 et déplacer ces derniers radialement, provoquant une poussée sur la surface radialement interne 12b' de la paroi radialement externe 12b et ainsi faire varier un diamètre externe D_{BA} de la section d'entrée BA. Le mécanisme actionneur à vérin 230 peut être électrique, hydraulique, pneumatique ou encore un système vis-écrou.

Les moyens 240 sont par exemple encastrés (par exemple par vulcanisation) dans la surface radialement interne 12b' de la paroi radialement externe 12b et se déplacent radialement sous l'action des mécanismes actionneurs à vérins 230.

Selon un exemple de réalisation, les moyens 240 comprennent une pluralité de prismes, par exemple de section triangulaire, répartis en au moins une rangée annulaire, cette pluralité de prismes étant actionnée par ledit au moins un vérin par l'intermédiaire d'au moins un élément annulaire 250.

Les prismes 240 et l'élément annulaire 250 sont réalisés dans un matériau rigide, par exemple métallique.

A la figure 5c, le tronçon amont 10 du carénage 3 de nacelle est en position convergente, le bras de vérin 230' du mécanisme actionneur à vérin 230 est entièrement sorti.

L'actionnement du mécanisme actionneur à vérin 230 entraine la sortie du bras de vérin 230', qui entraine le déplacement axial de l'élément annulaire 250 (dans le sens de la flèche F5 de la figure 5c), qui lui-même entraine le déplacement radialement externe de la rangée de prismes 240 (dans le sens de la flèche F6). L'élément annulaire 250 se déplace sur les faces des primes 240 de sorte à être, en position neutre du tronçon amont du carénage 3 de nacelle, dans une position affleurant la surface interne 12b' de la paroi interne 12b et, en position convergente du tronçon amont 10 du carénage 3 de nacelle, dans une position proche des sommets des primes 240. Les prismes 240 étant encastrés dans la surface radialement interne 12b' de la paroi radialement externe 12b et l'élément annulaire 250 étant rigides, le diamètre de la paroi radialement externe 12b et de la paroi radialement interne 12a augmente sous l'effet de la poussée radiale des prismes 240, entrainant l'augmentation de diamètre de la section d'entrée BA ayant pour effet de faire passer le tronçon amont 10 du carénage 3 de nacelle à une configuration convergente telle qu'illustrée en figure 5c. Avantageusement, les faces des prismes 240 et les éléments annulaires 250 sont recouverts d'un revêtement anti-friction.

Lorsque le mécanisme actionneur à vérin 230 est actionné de sorte à faire rentrer le bras de vérin 230', les éléments décrits précédemment se déplacent dans un sens opposé tendant à diminuer le diamètre de la section d'entrée BA. Les parois radialement interne 12a et radialement externe 12b du tronçon amont 10 étant réalisées dans un matériau à mémoire de forme, ceci a pour effet de faire ramener le tronçon amont 10 du carénage 3 de nacelle à la configuration neutre telle qu'illustrée en figure 5a.

Avantageusement mais non limitativement, chaque rangée annulaire comprend au moins quatre prismes 240 répartis azimutalement de manière équidistante le long de la surface radialement interne 12b' de la paroi radialement externe 12b du tronçon amont 10. On comprend aisément qu'un nombre de prismes élevé permettra de mieux répartir les poussées radiales et ainsi de garder une forme plus axisymétrique du tronçon amont 10 du carénage 3 de nacelle en position convergente.

Il pourrait encore être envisagé que le système propulsif 1, 1' comprenne plusieurs rangées de prismes 240 et autant de mécanismes actionneurs à vérins 230 propre à chaque rangée annulaire de prismes 240, indépendants les uns des autres.

Selon un autre exemple de réalisation non représenté, des couronnes annulaires sont directement reliée au bras de vérin 230' de chaque mécanisme actionneur 230. Chaque couronne annulaire coulisse alors directement sur la surface interne 12b' de la paroi externe 12b (convergente au repos). Avantageusement, la surface interne 12b' de la paroi externe 12b est alors munie d'un revêtement anti-friction.

Le passage de la configuration convergente à la configuration neutre du tronçon amont 10 du carénage 3 de nacelle, et inversement, se fait en continu en fonction de la sortie ou de la rentrée du bras de vérin 230' du mécanisme actionneur 230.

Selon un troisième exemple de réalisation avantageux non représenté, afin de faire varier le diamètre externe D_{BA} de la section d'entrée BA entre la position neutre et la position convergente, et inversement, la section d'entrée BA du carénage 3 de nacelle comporte un actionneur annulaire pneumatique ou hydraulique s'étendant autour de l'axe de rotation X du rotor 2. Cet actionneur annulaire est configuré pour se déformer radialement sous l'effet d'une pression de commande prédéterminée de sorte à faire varier un diamètre externe D_{BA} de la section d'entrée BA entre un diamètre minimum et un diamètre maximum.

Plus précisément, l'actionneur annulaire est configuré pour se déformer radialement sous l'effet d'une pression de commande prédéterminée de sorte à faire varier un diamètre externe D_{BA} de la section d'entrée BA entre une position neutre et une position convergente du tronçon amont 10 du carénage 3 de nacelle. Pour cela, l'actionneur annulaire est relié à un dispositif automatique pneumatique ou hydraulique connu en soi permettant d'introduire ou d'extraire un fluide dans ou à partir de cet actionneur annulaire par application d'une pression de commande adaptée selon la configuration convergente ou neutre désirée pour le tronçon aval 10 du carénage 3 de nacelle.

De préférence et avantageusement, l'actionneur annulaire est réalisé en matériau élastique rigidifié radialement, par exemple incluant des fibres. Par exemple, il est réalisé en matériau polymère incorporant un dispositif extérieur ou des inclusions le rigidifiant dans la direction radiale.

Selon un autre exemple de réalisation, l'actionneur annulaire comprend une vessie annulaire en matériau souple enchâssée dans un ressort spirale ayant pour fonction de limiter l'expansion diamétrale de la vessie souple. Une autre mode de réalisation pourrait être l'utilisation d'un matériau orthotrope présentant un module élastique plus important dans une direction radiale que dans une direction azimutale.

L'actionneur annulaire est configuré de sorte que, lorsqu'il est soumis à une augmentation de pression, une expansion d'un diamètre de section interne de l'actionneur annulaire est très inférieure à une expansion d'un diamètre externe de l'actionneur annulaire. Autrement dit, une augmentation de pression à l'intérieur de l'actionneur annulaire (ou de la vessie souple) se traduit par une expansion azimutale augmentant le du diamètre externe de l'actionneur annulaire.

En effet, l'augmentation progressive de la pression de commande induite par le dispositif automatique pneumatique ou hydraulique fait varier progressivement le diamètre externe de l'actionneur annulaire qui déforme les parois radialement interne 12a et radialement externe 12b en matériau déformable à mémoire de forme du tronçon amont 10 et, par conséquent, fait varier le diamètre externe D_{BA} de la section d'entrée BA qui passe ainsi d'un diamètre minimal D_{BAmin} dans la configuration neutre telle qu'illustrée à la figure 5a à un diamètre maximal D_{BAmax} dans la configuration convergente du tronçon amont 10 du carénage 3 de nacelle telle qu'illustrée à la figure 5b. De même, la réduction progressive de la pression de commande induite par le dispositif automatique pneumatique ou hydraulique fait passer progressivement le tronçon amont 10 du carénage 3 de nacelle d'une configuration convergente telle qu'illustrée à la figure 5b à une configuration neutre telle qu'illustrée à la figure 5a.

Le passage de la configuration neutre à la configuration convergente du tronçon amont 10 du carénage 3 de nacelle, et inversement, se fait en continu en fonction de la pression de commande induite par le dispositif automatique pneumatique ou hydraulique.

Selon un autre exemple de réalisation non représenté, les moyens permettant de faire varier le diamètre externe D_{BA} de la section d'entrée BA entre la position neutre et la position convergente et inversement, comprennent un dispositif d'expansion pneumatique. Ainsi, de l'air sous pression est injecté à l'intérieur de la lèvre annulaire amont 11 de sorte que cette lèvre se déplace en direction radialement externe, entrainant la rétractation de la paroi radialement externe 12b et l'étirement de la paroi radialement interne 12a de la portion annulaire aval du tronçon amont 10, et par conséquent, entrainant l'augmentation du diamètre externe D_{BA} de la section d'entrée BA Les parois 12a, 12b sont réalisées dans un matériau déformable à mémoire de forme de sorte à retrouver leur forme et leur dimension axiale neutre, et, par conséquent, de sorte que la section d'entrée BA retrouve également son diamètre neutre D_{BAmin} lorsque de l'air est retiré de la lèvre annulaire amont 11 par le dispositif d'expansion pneumatique.

Cette possibilité de modification aisée du diamètre externe D_{BA} de la section d'entrée BA du carénage 3 de nacelle permet d'adapter facilement le profil d'entrée du carénage 3 de nacelle selon les phases de vol d'un aéronef muni d'un système propulsif 1, 1' selon l'invention, autrement dit selon les contraintes aérodynamiques et mécaniques recherchées en fonctionnement du système propulsif 1, 1'. Ainsi, en phase de vol stationnaire proche du sol par exemple la portance créée par la carène sera accrue en utilisant une entrée d'air du carénage de nacelle convergent et par conséquent ayant un diamètre externe D_{BA} de la section d'entrée BA le plus grand possible, alors qu'en phase de vol en mode avion ou loin du sol, on cherchera à bénéficier du meilleur rendement propulsif et par conséquent à avoir un diamètre externe D_{BA} de la section d'entrée BA le plus petit possible.

Le tronçon amont 10 étant réalisé dans un matériau déformable, il est opportun de lui garantir une structure rigide de sorte à éviter son affaissement tant au repos que sous l'action d'un écoulement d'air en fonctionnement du système propulsif 1, 1' et permettant ainsi au carénage 3 de nacelle de conserver un profil aérodynamique homogène de sa section d'entrée BA. De la sorte, le tronçon amont 10 comprend avantageusement des raidisseurs 14 reliés par un dispositif anti-flambement 15.

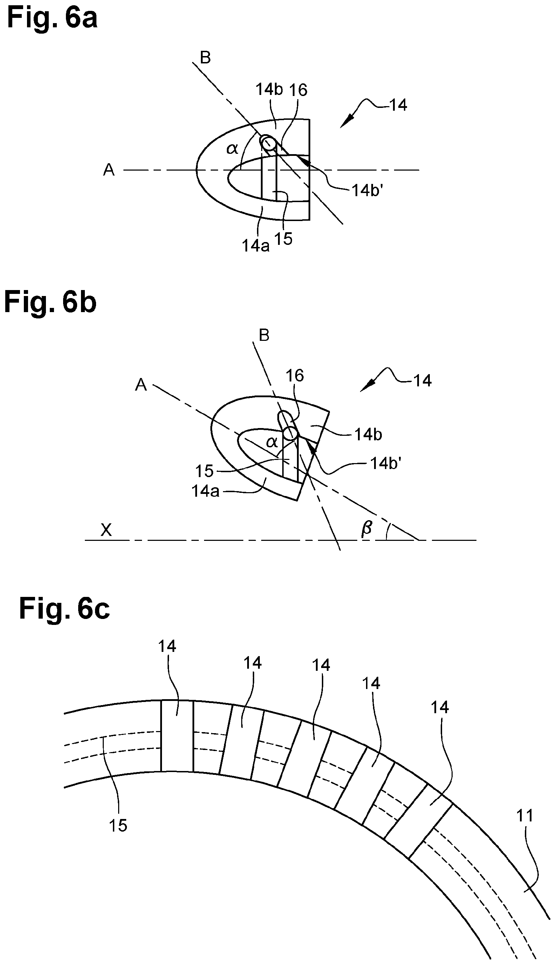

En référence aux figures 6a à 6c, une pluralité de raidisseurs 14 est ménagée dans la lèvre annulaire amont 11 du tronçon amont 10 et sont angulairement répartis comme cela est visible sur la figure 6c.

Ces raidisseurs, par exemple métalliques, présentent un profil aérodynamique de section en forme de C de sorte à correspondre à la forme aérodynamique de la section d'entrée BA du carénage 3 de nacelle. Un bras radialement externe 14b des raidisseurs 14, opposé à un bras radialement interne 14a, présente une encoche 16 de réception du dispositif anti-flambement 15, ménagée dans le bras 14b à partir d'une surface radialement interne 14b'. Selon l'exemple représenté, le dispositif anti-flambement 15 est constitué d'un anneau rigide, par exemple métallique. Le dispositif anti-flambement 15 ainsi inséré dans les encoches 16 de chaque raidisseur 14 sert d'armature assurant la liaison des raidisseurs 14 à l'intérieur de la lèvre annulaire amont 11.

Les encoches 16 présentent une forme semi-oblongue inclinée selon un angle α par rapport à un axe longitudinal A des raidisseurs 14.

En référence à la figure 6a, lorsque le tronçon amont 10 est en position neutre de sorte que le diamètre externe D_{BA} de la section d'entrée BA est minimal D_{BAmin}, les raidisseurs 14 sont dans une position de repos dans laquelle l'axe longitudinal A des raidisseurs 14 est sensiblement parallèle à l'axe de rotation X du rotor 2 du système propulsif 1, 1' et l'anneau d'anti-flambement 15 est positionné en butée dans le fond de l'encoche 16 des raidisseurs 14.

En référence à la figure 6b, lorsque le tronçon amont 10 est convergent de sorte à augmenter le diamètre externe D_{BA} de la section d'entrée BA jusqu'à une valeur maximale D_{BAmax}, les raidisseurs 14 sont dans une position inclinée dans laquelle l'axe longitudinal A des raidisseurs 14 est incliné selon un angle β par rapport à l'axe de rotation X du rotor 2 du système propulsif 1, 1' et l'anneau d'anti-flambement 15 est toujours engagé dans l'encoche 16 mais dans une position telle qu'elle ne sorte pas de la surface radialement interne 14b' des bras radialement externe 14b des raidisseurs 14.

Toutefois, un tel dispositif anti-flambement 15 n'est pas nécessaire pour le mode de réalisation mettant en œuvre les prismes 240, le mécanisme actionneur à vérin 230 et l'élément annulaire 250 pour faire varier le diamètre externe D_{BA} de la section d'entrée BA, ces éléments (230, 240, 250) assurant déjà la fonction anti-flambement.

Le tronçon amont 10, et notamment la lèvre annulaire amont 11, est encore configuré pour assurer une fonction d'antigivrage de l'entrée du carénage 3 de nacelle. Le tronçon amont 10 est en effet réalisé en un matériau lui configurant la possibilité de supporter des écarts de températures importants le rendant apte à assurer une fonction antigivrage lorsqu'il est approvisionné en air chaud.

Le tronçon intermédiaire 30 est rigide. Il est par exemple réalisé en alliage d'aluminium, Ta6V ou composite fibre de carbone à matrice organique. Le tronçon intermédiaire 30 est avantageusement relié au moteur 6 du système propulsif 1, 1' par au moins un bras 31, et, de préférence, par deux bras 31 de sorte à solidariser mécaniquement le carénage 3 de nacelle au moteur 6 du système propulsif 1, 1'. Le tronçon intermédiaire 30 confère ainsi, par son matériau et sa configuration, une fonction de blindage au système propulsif 1, 1'.

Une extrémité aval 21 du tronçon aval 20 forme une section de sortie (ou dit autrement un bord de fuite) BF ou une sortie d'air du carénage 3 de nacelle. Le tronçon aval 20 comprend une paroi radialement interne 20a et une paroi radialement externe 20b.

Les parois radialement interne 20a et radialement externe 20b du tronçon aval 20 assurent non seulement une fonction structurante du tronçon aval 20 mais également une fonction aérodynamique.

Les parois radialement interne 20a et radialement externe 20b du tronçon aval 20 sont réalisées dans un matériau déformable semi rigide à mémoire de forme. Autrement dit, le matériau constituant les parois radialement interne 20a et radialement externe 20b du tronçon aval 20 est à la fois rigide pour conférer au tronçon aval 20 une forme structurante et souple pour conférer au tronçon aval 20 une possibilité de déformation. Ainsi, les parois radialement interne 20a et radialement externe 20b du tronçon aval 20 sont réalisées dans un matériau apte à réagir sous l'effet d'un actionneur tel que décrit ci-après. Lorsque les parois radialement interne 20a et radialement externe 20b du tronçon aval 20 sont excitées par l'actionneur, les parois se déforment et prennent une forme structurante (c'est-à-dire une forme neutre divergente et sans excitation convergente). Par exemple, les parois radialement interne 20a et externe 20b sont réalisées en composite ou en un alliage de nickel et titane (encore connu sous le nom « Kiokalloy) tel que le NiTiNol ou le NiTiCu.

Le matériau à mémoire de forme constituant les parois radialement interne 20a et externe 20b est à sureté intégrée, c'est-à-dire qu'il est tel, que sa position de repos, autrement dit lorsque l'actionneur n'agit pas sur la matériau à mémoire de forme en vue de sa déformation, correspond à une géométrie naturelle de stockage dudit matériau ou de plus longue durée d'utilisation, à savoir, dans le cas d'une utilisation pour un tronçon aval 20 du carénage 3 de nacelle d'un système propulsif 1, 1' d'aéronef, cela correspond à une forme convergente du tronçon aval 20. Ainsi, en cas de panne de l'actionneur, le matériau à mémoire de forme reprendra sa forme naturelle au repos et le carénage 3 de nacelle reprendra une géométrie sécurisée pour assurer le bon fonctionnement du système propulsif 1, 1' de l'aéronef.

Les parois radialement interne 20a et externe 20b peuvent également présenter une épaisseur variable axialement et également azimutalement à proximité des pontets de rigidification 22 de sorte à modifier localement l'élasticité du matériau à mémoire de forme les constituant. Il est en outre possible d'optimiser localement les caractéristiques mécaniques du matériau à mémoire de forme constituant les parois radialement interne 20a et externe 20b en fonction des propriétés locales souhaitées le long du tronçon aval 20. Ainsi, il peut être envisagé que le tronçon aval 20 soit constitué d'une pluralité de tronçons de matériaux différents.

Le tronçon aval 20 étant réalisé dans un matériau déformable, semi rigide lui garantissant une forme structurale rigide de sorte à éviter son affaissement tant au repos que sous l'action d'un écoulement d'air en fonctionnement du système propulsif 1, 1' et permettant ainsi au carénage 3 de nacelle de conserver un profil aérodynamique homogène de sa section de sortie BF. Avantageusement, l'extrémité aval 21 du tronçon aval 20 peut être réalisée en un matériau orthotrope présentant des modules élastiques adéquats.

De plus, afin d'assurer un écart sensiblement constant entre les parois radialement interne 20a et radialement externe 20b du tronçon aval 20, des pontets de rigidification 22 sont ménagés angulairement à intervalles réguliers entre ces parois 20a, 20b.

Le tronçon aval 20 comprend encore des moyens permettant de faire varier un diamètre externe D_{BF} de la section de sortie BF entre un diamètre externe minimal D_{BFc} correspondant à une position convergente du tronçon aval 20 du carénage 3 de nacelle et un diamètre externe maximal D_{BFd} correspondant à une position divergente du tronçon aval 20 du carénage 3 de nacelle. Là encore, les termes « convergente » et « divergente » utilisés en référence au tronçon aval 20 sont des considérations fluidiques et non pas géométriques. En effet, un autre but de la présente invention est de pouvoir bénéficier d'un carénage 3 de nacelle de système propulsif 1, 1' dont il possible de faire varier la section de sortie d'air et notamment la forme des profils aérodynamiques constituant le carénage de nacelle. Autrement dit dont il est possible de faire varier le diamètre externe D_{BF} de la section de sortie BF ainsi que la forme aérodynamique du tronçon aval 20 entre une configuration dite convergente dans laquelle un tube de courant d'air en sortie du carénage 3 de nacelle présente une forme convergente, et une configuration dite divergente dans laquelle un tube de courant d'air en sortie du carénage 3 de nacelle présente une forme divergente.

Autrement dit, pour un rotor caréné, durant les phases de vol de l'aéronef où les effets de sol sont négligeables, la poussée créée par le carénage 3 de nacelle, et donc le rendement de l'ensemble propulsif, seront maximisés avec un profil de sortie d'air du carénage 3 de nacelle de forme convergente, alors que pour d'autres phases de vol tel que le vol stationnaire de l'aéronef en présence d'effets de sol, un profil de sortie d'air du carénage 3 de nacelle de forme divergente est préféré, car il maximise la poussée créée par le carénage 3 de nacelle dans ces conditions.

A cet effet, l'extrémité aval 21 du tronçon aval 20 formant la section de sortie BF du carénage 3 de nacelle comporte un actionneur annulaire 23 pneumatique ou hydraulique s'étendant autour de l'axe de rotation X du rotor 2.

Cet actionneur annulaire 23 est configuré pour se déformer radialement sous l'effet d'une pression de commande prédéterminée de sorte à faire varier un diamètre externe D_{BF} de la section de sortie BF entre un diamètre minimum et un diamètre maximum.

Plus précisément, l'actionneur annulaire 23 est configuré pour se déformer radialement sous l'effet d'une pression de commande prédéterminée de sorte à faire varier un diamètre externe D_{BF} de la section de sortie BF entre un diamètre dit de convergence D_{BFc} correspondant à une configuration dite convergente du carénage 3 de nacelle et un diamètre de divergence D_{BFd} correspondant à une configuration dite divergente du carénage 3 de nacelle. Pour cela, l'actionneur annulaire 23 est relié à un dispositif automatique pneumatique ou hydraulique connu en soi (non représenté) permettant d'introduire ou d'extraire un fluide dans ou à partir de cet actionneur annulaire 23 par application d'une pression de commande adaptée selon la configuration convergente ou divergente désirée pour le carénage 3 de nacelle.

De préférence et avantageusement, l'actionneur annulaire 23 est réalisé en matériau élastique rigidifié radialement, par exemple par inclusion de fibres. Par exemple, il est réalisé en matériau polymère incorporant un dispositif extérieur ou des inclusions le rigidifiant dans la direction radiale.

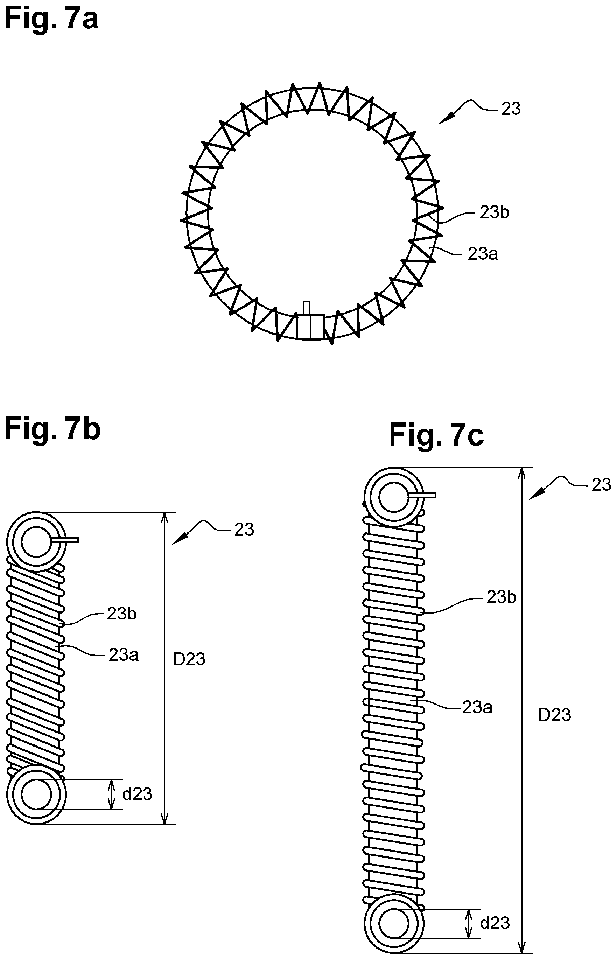

Selon l'exemple de réalisation illustré aux figures 7a à 7c, l'actionneur annulaire 23 comprend une vessie annulaire 23a en matériau souple enchâssée dans un ressort spirale 23b, ce ressort 23b ayant pour fonction de limiter l'expansion diamétrale de la vessie 23a. Une autre mode de réalisation pourrait être l'utilisation d'un matériau orthotrope présentant un module élastique plus important dans une direction radiale que dans une direction azimutale.

L'actionneur annulaire 23 est configuré de sorte que, lorsqu'il est soumis à une augmentation de pression, une expansion d'un diamètre de section interne d23 de l'actionneur annulaire 23 est très inférieure à une expansion d'un diamètre externe D₂₃ de l'actionneur annulaire 23. Autrement dit, une augmentation de pression à l'intérieur de l'actionneur annulaire 23 (ou de la vessie 23a) se traduit par une expansion azimutale du diamètre externe D₂₃ de l'actionneur annulaire 23.

La figure 2 représente un système propulsif 1, 1' selon l'invention dont le carénage 3 de nacelle est montré dans une configuration convergente. L'actionneur annulaire 23 est soumis à une pression de commande sensiblement égale à une pression ambiante entre les parois radialement interne 20a et externe 20b du tronçon aval 20 du carénage 3 de nacelle. Le diamètre externe D₂₃ de l'actionneur annulaire 23 étant alors minimal D₂₃ₘᵢₙ.

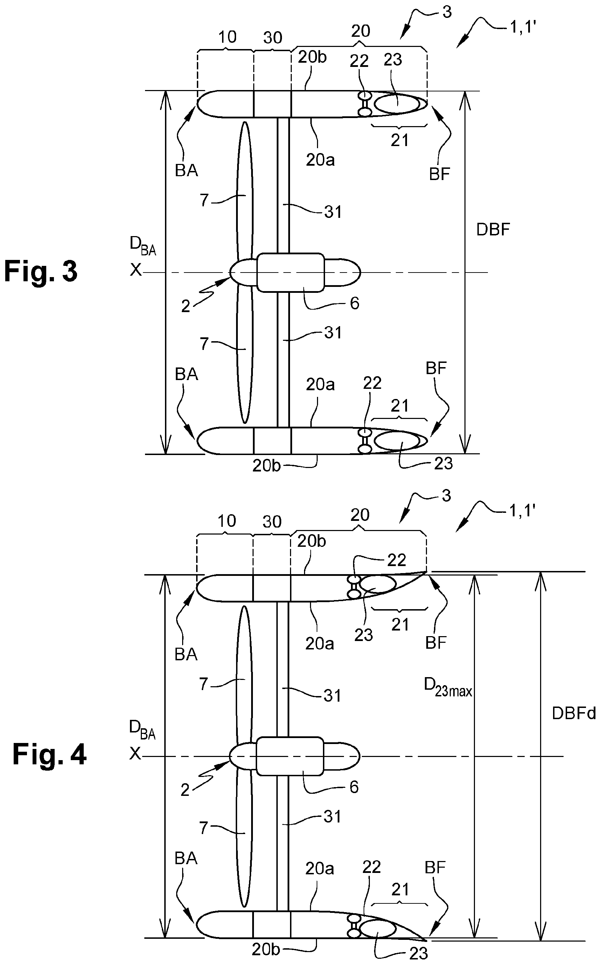

La figure 3 représente un système propulsif 1, 1' selon l'invention dont le carénage 3 de nacelle est montré dans une position intermédiaire entre la configuration convergente et la configuration divergente. L'actionneur annulaire 23 est soumis à une pression de commande intermédiaire supérieure à la pression de commande assurant la configuration convergente du carénage 3 de nacelle.

La figure 4 représente un système propulsif 1, 1' selon l'invention dont le carénage 3 de nacelle est montré dans une configuration divergente.

L'actionneur annulaire 23 est soumis à une pression de commande supérieure à la pression de commande intermédiaire. Le diamètre externe D₂₃ de l'actionneur annulaire 23 étant alors maximal D₂₃ₘₐₓ.

En effet, l'augmentation progressive de la pression de commande induite par le dispositif automatique pneumatique ou hydraulique fait varier progressivement le diamètre externe D₂₃ de l'actionneur annulaire 23 qui déforme les parois radialement interne 20a et radialement externe 20b en matériau déformable à mémoire de forme du tronçon aval 20 et, par conséquent, fait varier le diamètre externe D_{BF} de la section de sortie BF qui passe ainsi d'un diamètre minimal D_{BFc} dans la configuration convergente telle qu'illustrée à la figure 2 à un diamètre maximal D_{BFd} dans la configuration divergente du carénage 3 de nacelle telle qu'illustrée à la figure 4, en passant par un diamètre intermédiaire D_{BFi} dans la configuration intermédiaire telle qu'illustrée à la figure 3.

De même, la réduction progressive de la pression de commande induite par le dispositif automatique pneumatique ou hydraulique fait passer progressivement le carénage 3 de nacelle d'une configuration divergente telle qu'illustrée à la figure 4 à une configuration convergente telle qu'illustrée à la figure 2.

Le passage de la configuration convergente à la configuration divergente du tronçon aval 20 du carénage 3 de nacelle, et inversement, se fait en continu en fonction de la pression de commande induite par le dispositif automatique pneumatique ou hydraulique, les pontets de rigidification 22 assurant un écart sensiblement constant entre les parois radialement interne 20a et radialement externe 20b du tronçon aval 20 lors des changements de configuration de la section de sortie BF (autrement dit de la section de sortie) du carénage 3 de nacelle.

Ainsi, le profil aérodynamique de la section d'entrée et de la section de sortie du carénage 3 de nacelle peut avantageusement être optimisé en fonction des contraintes aérodynamiques et mécaniques recherchées selon la phase de fonctionnement de l'aéronef, entre une configuration divergente ou convergente pour former, respectivement, sur son pourtour, un tube de courant divergent ou convergent.

Le système propulsif 1, 1' selon l'invention permet ainsi de pouvoir bénéficier de manière simple et rapide, selon les besoins de l'aéronef, d'un tronçon aval 20 de carénage 3 de nacelle de rotors 2 convergent ou divergent. Le carénage 3 de nacelle du système propulsif 1, 1' selon l'invention permet ainsi, par sa forme, sa construction et les matériaux dont il est constitué, d'agir comme un écran acoustique contre le bruit émanant de la rotation des rotors 2, garant d'une meilleure atténuation des émissions acoustiques mais également d'une sécurité accrue des rotors 2 par rapport à d'éventuels obstacles alentours tout en bénéficiant de l'effet de poussée du carénage 3 de nacelle du système propulsif 1, 1' utile en vol stationnaire ou à faible vitesse d'avancement.

Ainsi, un aéronef muni d'un système propulsif 1, 1' selon l'invention présente l'avantage intéressant de pouvoir disposer, selon les besoins, d'un carénage 3 de nacelle de rotor divergent ou convergent, la section du carénage 3 de nacelle variant selon les conditions de vol de l'aéronef et les besoins de rendement propulsif de ce dernier, pour des performances aérodynamiques optimales de l'aéronef. Lorsque l'aéronef est dans une phase de vol à une vitesse d'avancement relativement importante, le carénage 3 de nacelle est en position convergente. Lorsque l'aéronef décolle ou lorsque l'aéronef est dans une phase de vol vertical au dessus d'une surface et que les effets de sol sont importants, le tronçon aval 20 du carénage 3 de nacelle est en position divergente.

En effet, la combinaison des variations de la section d'entrée et de la section de sortie permet de modifier la veine d'écoulement de l'air du système propulsif améliorant ainsi considérablement les performances aérodynamiques de l'aéronef.

De plus, la possibilité de pouvoir faire varier également le diamètre externe D_{BA} de la section d'entrée BA (ou bord d'attaque) du carénage 3 de nacelle entre une position neutre et une position convergente permet encore d'améliorer les performances aérodynamiques de l'aéronef.

## Revendications

1. Système propulsif (1, 1') pour un aéronef, comprenant au moins un rotor (2) et un carénage (3) de nacelle s'étendant autour dudit au moins un rotor (2) par rapport à un axe (X) de rotation dudit rotor (2), ce carénage (3) de nacelle comprenant :
- un tronçon amont (10) formant une section d'entrée (BA) du carénage (3) de nacelle ;
- un tronçon aval (20) dont une extrémité aval (21) forme une section de sortie (BF) du carénage (3) de nacelle ; et
- un tronçon intermédiaire (30) reliant lesdits tronçons amont (10) et aval (20) ; le tronçon aval (20) comprenant une paroi radialement interne (20a) et une paroi radialement externe (20b) réalisées dans un matériau déformable à mémoire de forme; **caractérisé en ce que** l'extrémité aval (21) formant section de sortie (BF) comporte un actionneur annulaire (23) pneumatique ou hydraulique s'étendant autour dudit axe (X) de rotation et configuré pour se déformer radialement sous l'effet d'une pression de commande prédéterminée de sorte à faire varier un diamètre externe (D_{BF}) de la section de sortie (BF) entre un diamètre minimum (D_{BFc}) et un diamètre maximum (D_{BFd}) déterminés.

2. Système propulsif (1, 1') selon la revendication précédente, **caractérisé en ce que** l'actionneur annulaire est réalisé en matériau élastique rigidifié radialement incluant des fibres.

3. Système propulsif (1, 1') selon la revendication 1, **caractérisé en ce que** l'actionneur annulaire (23) comprend une vessie annulaire (23a) en matériau souple enchâssée dans un ressort spirale (23b).

4. Système propulsif (1, 1') selon l'une des revendications précédentes, **caractérisé en ce que** le système comprenant en outre des pontets (22) de rigidification reliant les parois radialement interne (20a) et radialement externe (20b) du tronçon aval (20).

5. Système propulsif (1, 1') selon l'une des revendications précédentes, **caractérisé en ce que** le tronçon intermédiaire (30) est rigide et est relié par au moins un bras (31) à un moteur (6) du système propulsif (1, 1').

6. Système propulsif (1, 1') selon l'une des revendications précédentes, **caractérisé en ce que** le tronçon amont (10) est réalisé dans un matériau déformable à mémoire de forme, ce tronçon amont (10) comprenant des moyens permettant de faire varier un diamètre externe (D_{BA}) de la section d'entrée (BA).

7. Système propulsif (1, 1') selon la revendication précédente, **caractérisé en ce que** le diamètre externe (D_{BA}) de la section d'entrée (BA) varie sous l'effet d'un dispositif d'expansion pneumatique ou hydraulique.

8. Système propulsif (1, 1') selon la revendication 6, **caractérisé en ce que** le diamètre externe (D_{BA}) de la section d'entrée (BA) varie sous l'effet d'un revêtement annulaire chauffant (13), le tronçon amont (10) présentant encore des caractéristiques thermo-rétractables.

9. Système propulsif (1, 1') selon l'une des revendications précédentes, **caractérisé en ce que** le tronçon amont (10) comprend des raidisseurs (14) reliés par un dispositif anti-flambement (15).

10. Système propulsif (1, 1') selon la revendication 6, **caractérisé en ce que** le diamètre externe (D_{BA}) de la section d'entrée (BA) varie sous l'effet d'un mécanisme actionneur à vérin (230) configuré pour coopérer avec des moyens (240) solidaires d'une surface interne (12b') d'une paroi radialement externe (12b) du tronçon amont (10).

11. Système propulsif (1, 1') selon la revendication 6, **caractérisé en ce que** le diamètre externe (D_{BA}) de la section d'entrée (BA) varie sous l'effet d'un actionneur annulaire pneumatique ou hydraulique configuré pour se déformer radialement sous l'effet d'une pression de commande prédéterminée.

12. Aéronef **caractérisé en ce qu'**il comporte au moins un système propulsif (1, 1') selon l'une quelconque des revendications 1 à 9, le système propulsif (1, 1') étant monté pivotant sur l'aéronef par l'intermédiaire d'un arbre de pivotement (4, 4') déporté ou traversant par rapport au rotor (2).

## Patentansprüche

1. Antriebssystem (1, 1') für ein Luftfahrzeug, das mindestens einen Rotor (2) und eine Gondelverkleidung (3) umfasst, die sich um den mindestens einen Rotor (2) in Bezug zu einer Drehachse (X) des Rotors (2) erstreckt, wobei diese Gondelverkleidung (3) umfasst:
- einen stromaufwärtigen Abschnitt (10), der einen Eingangsteilabschnitt (BA) der Gondelverkleidung (3) bildet;
- einen stromabwärtigen Abschnitt (20), von dem ein stromaufwärtiges Ende (21) einen Ausgangsteilabschnitt (BF) der Gondelverkleidung (3) bildet; und
- einen Zwischenabschnitt (30), der den stromaufwärtigen (10) und den stromabwärtigen (20) Abschnitt verbindet;
wobei der stromabwärtige Abschnitt (20) eine radial innere Wand (20a) und eine radial äußere Wand (20b) umfasst, die aus einem verformbaren Material mit Formgedächtnis hergestellt sind;
**dadurch gekennzeichnet, dass** das stromabwärtige Ende (21), das den Ausgangsteilabschnitt (BF) bildet, einen pneumatischen oder hydraulischen ringförmigen Aktuator (23) umfasst, der sich um die Drehachse (X) erstreckt und dazu konfiguriert ist, sich radial unter der Einwirkung eines vorbestimmten Steuerdrucks derart zu verformen, dass ein Außendurchmesser (D_{BF}) des Ausgangsteilabschnitts (BF) zwischen einem bestimmten Mindestdurchmesser (D_{BFc}) und einem bestimmten Höchstdurchmesser (D_{BFd}) variiert wird.

2. Antriebssystem (1, 1') nach dem vorstehenden Anspruch, **dadurch gekennzeichnet, dass** der ringförmige Aktuator aus radial versteiftem elastischem Material, das Fasern beinhaltet, hergestellt ist.

3. Antriebssystem (1, 1') nach Anspruch 1, **dadurch gekennzeichnet, dass** der ringförmige Aktuator (23) einen ringförmigen Balg (23a) aus biegsamem Material, der in eine Spiralfeder (23b) gepasst ist, umfasst.

4. Antriebssystem (1, 1') nach einem der vorstehenden Ansprüche, **dadurch gekennzeichnet, dass** das System weiter Versteifungsstege (22) umfasst, die die radial innere (20a) und radial äußere Wand (20b) des stromabwärtigen Abschnitts (20) verbinden.

5. Antriebssystem (1, 1') nach einem der vorstehenden Ansprüche, **dadurch gekennzeichnet, dass** der Zwischenabschnitt (30) steif ist und durch mindestens einen Arm (31) mit einem Motor (6) des Antriebssystems (1, 1') verbunden ist.

6. Antriebssystem (1, 1') nach einem der vorstehenden Ansprüche, **dadurch gekennzeichnet, dass** der stromaufwärtige Abschnitt (10) aus einem verformbaren Material mit Formgedächtnis hergestellt ist, wobei dieser stromaufwärtige Abschnitt (10) Mittel umfasst, die es erlauben, einen Außendurchmesser (D_{BA}) des Eingangsteilabschnitts (BA) variieren zu lassen.

7. Antriebssystem (1, 1') nach dem vorstehenden Anspruch, **dadurch gekennzeichnet, dass** der Außendurchmesser (D_{BA}) des Eingangsteilabschnitts (BA) unter der Einwirkung einer pneumatischen oder hydraulischen Expansionsvorrichtung variiert.

8. Antriebssystem (1, 1') nach Anspruch 6, **dadurch gekennzeichnet, dass** der Außendurchmesser (D_{BA}) des Eingangsteilabschnitts (BA) unter der Einwirkung einer heizenden ringförmigen Beschichtung (13) variiert, wobei der stromaufwärtige Abschnitt (10) noch wärmeschrumpfbare Merkmale aufweist.

9. Antriebssystem (1, 1') nach einem der vorstehenden Ansprüche, **dadurch gekennzeichnet, dass** der stromaufwärtige Abschnitt (10) Versteifungen (14) umfasst, die durch eine Knickschutzvorrichtung (15) verbunden sind.

10. Antriebssystem (1, 1') nach Anspruch 6, **dadurch gekennzeichnet, dass** der Außendurchmesser (D_{BA}) des Eingangsteilabschnitts (BA) unter der Einwirkung eines Betätigungsmechanismus mit Zylinder (230), der dazu konfiguriert ist, mit Mitteln (240), die fest mit einer Innenoberfläche (12b') einer radial äußeren Wand (12b) des stromaufwärtigen Abschnitts (10) zusammenzuwirken, variiert.

11. Antriebssystem (1, 1') nach Anspruch 6, **dadurch gekennzeichnet, dass** der Außendurchmesser (D_{BA}) des Eingangsteilabschnitts (BA) unter der Einwirkung eines pneumatischen oder hydraulischen ringförmigen Aktuators, der dazu konfiguriert ist, sich radial unter der Einwirkung eines vorbestimmten Steuerdrucks zu verformen, variiert.

12. Luftfahrzeug, **dadurch gekennzeichnet, dass** es mindestens ein Antriebssystem (1, 1') nach einem der Ansprüche 1 bis 9 umfasst, wobei das Antriebssystem (1, 1') schwenkend auf dem Luftfahrzeug über eine versetzte oder in Bezug auf den Rotor (2) durchgehende Schwenkwelle (4, 4') montiert ist.

## Claims

1. A propulsion system (1, 1') for an aircraft, comprising at least one rotor (2) and a nacelle fairing (3) extending around said at least one rotor (2) with respect to an axis (X) of rotation of said rotor (2), this nacelle fairing (3) comprising:
- an upstream section (10) forming an inlet section (BA) of the nacelle fairing (3);
- a downstream section (20), a downstream end (21) of which forms an outlet section (BF) of the nacelle fairing (3); and
- an intermediate section (30) connecting said upstream (10) and downstream (20) sections;
the downstream section (20) comprising a radially inner wall (20a) and a radially outer wall (20b) made of a deformable shape-memory material,
**characterised in that** the downstream end (21) forming an outlet section (BF) comprises a pneumatic or hydraulic annular actuator (23) extending around said axis (X) of rotation and configured to deform radially under the effect of a predetermined control pressure so as to vary an outer diameter (D_{BF}) of the outlet section (BF) between a determined minimum diameter (D_{BFc}) and a determined maximum diameter (D_{BFd}).

2. The propulsion system (1, 1') according to the preceding claim, **characterized in that** the annular actuator is made of a radially stiffened elastic material including fibers.

3. The propulsion system (1, 1') according to claim 1, **characterized in that** the annular actuator (23) comprises an annular bladder (23a) of flexible material enshrined in a spiral spring (23b).

4. The propulsion system (1, 1') according to one of the preceding claims, further comprising stiffening bridges (22) connecting the radially inner (20a) and radially outer (20b) walls of the downstream section (20).

5. The propulsion system (1, 1') according to one of the preceding claims, wherein the intermediate section (30) is rigid and is connected by at least one arm (31) to a motor (6) of the propulsion system (1, 1').

6. The propulsion system (1, 1') according to one of the preceding claims wherein the upstream section (10) is made of a deformable shape-memory material, this upstream section (10) comprising means for varying an outer diameter (D_{BA}) of the inlet section (BA).

7. The propulsion system (1, 1') according to the preceding claim, wherein the outer diameter (D_{BA}) of the inlet section (BA) varies under the effect of a pneumatic or hydraulic expansion device.

8. The propulsion system (1, 1') according to claim 6, wherein the outer diameter (D_{BA}) of the inlet section (BA) varies under the effect of a heating annular coating (13), the upstream section (10) still having heat-shrinkable characteristics.

9. The propulsion system (1, 1') according to one of the preceding claims, wherein the upstream section (10) comprises stiffeners (14) connected by an anti-buckling device (15).

10. The propulsion system (1, 1') according to claim 6, wherein the outer diameter (D_{BA}) of the inlet section (BA) varies under the effect of an actuator mechanism (230) with cylinder configured to cooperate with means (240) integral with an internal surface (12b') of a radially outer wall (12b) of the upstream section (10).

11. The propulsion system (1, 1') according to claim 6, wherein the outer diameter (D_{BA}) of the inlet section (BA) varies under the effect of a pneumatic or hydraulic annular actuator configured to deform radially under the effect of a predetermined control pressure.

12. Aircraft **characterised in that** it comprises at least one propulsion system (1, 1') according to any one of claims 1 to 9, the propulsion system (1, 1') being mounted so as to pivot on the aircraft by means of a pivot shaft (4, 4') which is offset or through with respect to the rotor (2).
